# FASCICULE DE BREVET EUROPEEN

(11) **EP 2 129 551 B1**
(45) Date de publication et mention de la délivrance du brevet: **15.11.2017**
(21) Numéro de dépôt: 07872449.9
(22) Date de dépôt: 27.12.2007
(51) Int. Cl.: B60R 7/04, B60R 5/00, B64D 11/06

(54) **DISPOSITIF DE RANGEMENT DE BAGAGES POUR VÉHICULE DE TRANSPORT EN COMMUN**
EINRICHTUNG ZUM VERSTAUEN VON GEPÄCK FÜR ÖFFENTLICHES TRANSPORTFAHRZEUG
DEVICE FOR STORING LUGGAGE FOR A PUBLIC TRANSPORT VEHICLE

(30) Priorité: 02.01.2007 FR 0700006
(43) Date de publication de la demande: 09.12.2009
(73) Titulaire: Airbus, 31700 Blagnac (FR)
(72) Inventeur: ALBERTI, Jérôme, F-31000 Toulouse (FR)
(74) Mandataire: Santarelli
(86) Numéro de dépôt international: PCT/FR2007/002175
(87) Numéro de publication internationale: WO 2008/102078

(56) Documents cités:
- EP-A- 1 366 988
- DE-U1-202004 008 069

## Description

La présente invention concerne un dispositif de rangement de bagages pour véhicule de transport en commun, par exemple pour un aéronef.

Habituellement, dans un aéronef, les bagages à main accompagnant les voyageurs en cabine sont disposés dans un coffre à bagages disposés en hauteur, au-dessus des sièges.

Cette disposition présente plusieurs inconvénients.

Compte tenu de la forme générale d'une cabine d'aéronef, dont la section présente généralement la forme d'un arc de cercle, il reste peu de place libre au-dessus de la tête des passagers assis. Ceux-ci, en se levant, doivent veiller à ne pas se heurter la tête contre le coffre à bagages. Pour progresser de l'allée longitudinale de l'avion à leur siège, ou de leur siège à l'allée longitudinale, les passagers doivent se baisser, ce qui est inconfortable pour eux, et entraine des délais dans le processus d'embarquement et de désembarquement des passagers.

Qui plus est, l'accès aux sièges est très délicat pour les personnes à mobilité réduite ne pouvant pas se baisser facilement.

Par ailleurs, le positionnement des coffres à bagages près du plafond, avec une ouverture des coffres vers l'allée oblige les passagers à stationner dans l'allée pour réaliser le chargement des bagages dans ces coffres, ce qui empêche les autres passagers de progresser le long de l'allée longitudinale. Le processus d'embarquement est donc ralenti. Il en va de même avec le processus de désembarquement. Pour résoudre ce problème, les allées des avions sont parfois surdimensionnées pour laisser passer deux passagers, mais cela entraine une perte d'espace au détriment de l'espace consacré aux sièges des passagers.

Par ailleurs, la présence des coffres à bagages donne à l'espace intérieur de la cabine un aspect confiné, ce qui est désagréable pour les passagers en position assise pendant la durée du trajet.

De même, les sièges connus ont une assise basse, ce qui impose aux passagers de voyager avec les genoux fléchis ce qui est inconfortable.

Par ailleurs, les passagers ne disposent pas, avec les coffres à bagages connus, d'un espace individualisé de rangement de bagages, ce qui amène des voyageurs à confondre leur bagage avec celui d'un autre voyageur.

Par ailleurs, la structure des coffres à bagages accrochée au plafond est lourde, du fait des contraintes de sécurité spécifiques aux aéronefs, et est responsable d'une partie importante du poids total de l'avion, ce qui augmente sa consommation de carburant et limite son autonomie.

On connaît, par le document de brevet EP 1 366 988 A1, qui sert de base pour la présentation en deux parties de la revendication 1, un coffre à bagages apte à être disposé sous un siège dont l'assise peut être rabattue contre le dossier, le coffre comportant un casier de forme générale parallélépipédique. Le casier comporte une ouverture, et est mobile entre une position couchée dans laquelle l'ouverture du casier se trouve face à une paroi du compartiment et une position inclinée dans laquelle l'ouverture du casier se trouve face à l'emplacement de l'assise du siège, dégageant ainsi un chemin d'accès au casier.

Un tel coffre offre seulement une flexibilité limitée pour le positionnement des bagages. Il impose des contraintes de taille et de forme aux bagages, du fait du caractère clos du casier. De gros bagages ne pourront pas entrer dans le casier, et de petits bagages ne seront pas stabilisés dans le casier, risquant ainsi de bouger intempestivement au cours de manoeuvres de l'avion, ce qu'il est préférable d'éviter.

Par ailleurs, un tel coffre est de construction complexe, et peut donc se révéler fragile, notamment du fait du caractère mobile du casier du coffre.

Par ailleurs, un tel coffre possède un poids relativement important.

On connaît aussi, par le document de brevet EP 1 647 483 A1, un coffre à bagages de forme générale extérieurement triangulaire, apte à être disposé sous un siège dont l'assise peut être rabattue contre le dossier, et comprenant une surface de fond. La forme extérieure triangulaire du coffre à bagages et le faible espace disponible dans le coffre offrent une flexibilité faible dans le chargement des bagages. Seuls de petits bagages répondant à des contraintes géométriques particulières peuvent être chargés dans le coffre. Par ailleurs, un tel coffre à bagages est assez lourd.

La présente invention a pour but de fournir un nouveau dispositif de rangement de bagages pour un véhicule de transport de passagers, par exemple pour un aéronef, permettant de libérer l'espace se trouvant au-dessus des passagers assis, et de pallier aux différents inconvénients décrits ci-dessus, notamment en offrant une plus grande flexibilité du rangement dans le dispositif de rangement de bagages. De préférence, la solution selon l'invention présentera un poids minimal.

Pour résoudre les différents problèmes mentionnés ci-dessus, la présente invention propose un siège selon la revendication 1. Ce dispositif présente les avantages suivants :
- le dispositif peut être posé sur le plancher de la cabine de passagers grâce à l'embase,
- un ou plusieurs bagages présentant un angle, par exemple droit, peuvent être posés sur les surfaces de support, dans l'espace de rangement dans l'angle que celles-ci forment, l'angle du bagage venant se positionner dans l'angle des deux surfaces, celles-ci soutenant et stabilisant le bagage.

Préférentiellement, les deux surfaces de support (3', 4') forment un angle compris entre 75° et 135°.

Cela permet de positionner un bagage ayant un angle droit en occupant au mieux l'espace délimité par les deux surfaces
- l'angle que forment les surfaces de support offre un volume supplémentaire à l'extérieur du dispositif de rangement.
- le poids du dispositif est faible
- le dispositif est solide car simple, et les coûts de maintenance sont réduits
- l'espace occupé par le dispositif est faible.

Préférentiellement, l'angle entre les deux surfaces de support est proche de 90°, par exemple compris entre 85° et 95°. Cela permet une bonne adaptation de cet angle avec la plupart des bagages et donc une meilleure utilisation de l'espace de rangement.

Préférentiellement, le dispositif de rangement de bagages comprend en outre un évidement, ledit évidement réalisant au moins une ouverture dans l'une des surfaces de support.

Cela permet de disposer un ou des bagages dans le dispositif de rangement de bagages en disposant une partie du ou des bagages hors de l'espace délimité par les deux surfaces de support, dans l'évidement du dispositif. Cela permet également de positionner un ou des bagages dans une pluralité d'orientation, de manière à occuper au mieux l'espace dans le dispositif et dans l'environnement du dispositif, quelque soit la taille et la géométrie des bagages. En particulier, un bagage peut être positionné dans l'évidement de telle manière qu'une dimension allongée de ce bagage soit parallèle à la direction de l'évidement.

Préférentiellement, ledit évidement comporte un fond allongé suivant une direction transversale à l'intersection des deux surfaces de support, et ledit évidement s'étend, à l'opposé du fond de telle sorte qu'il réalise dans chaque surface de support une ouverture débouchant dans le bord libre de la surface de support correspondante opposé à l'intersection des deux surfaces de support.

Cela permet de poser un bagage verticalement dans l'évidement et d'utiliser au mieux l'espace de rangement. Cela permet également d'introduire des bagages de taille importante.

Dans une forme de réalisation avantageuse, chaque ouverture présente une forme globale en U avec un fond et deux branches ; la largeur de chaque ouverture correspondant à la distance entre les deux branches croît d'une valeur minimale près du fond à une valeur maximale vers l'embouchure de l'ouverture.

Préférentiellement, l'ouverture comporte au moins un bossage formant un cran pour épouser la forme des bagages.

Préférentiellement, les branches comportent chacune au moins un bossage formant un cran, deux bossages se faisant face formant un appui dans l'ouverture. Ainsi la forme de l'évidement est adaptée à des bagages de dimensions variées, grâce à l'appui formé par les bossages qui permettent le maintien de ces bagages dans l'ouverture, tout en utilisant au mieux l'espace disponible.

Préférentiellement, le dispositif de rangement de bagages selon l'invention comporte des moyens de retenue pour au moins un bagage prenant place dans l'espace de rangement. Ces moyens comprennent par exemple une lanière, par exemple une lanière élastique.

Les moyens de retenue permettent de limiter le mouvement dans l'évidement des bagages, et aussi d'empêcher un vêtement ou un livre de glisser sur le bagage. Une telle lanière est un moyen facile à mettre en place, léger, et facile à manipuler ensuite pour le passager. Il est également adaptable à des bagages de tailles variables, et permet d'assurer leur maintien de manière sécurisée.

Préférentiellement, le dispositif comprend en outre une potence positionnée de telle manière qu'elle permet la fixation de la lanière après l'introduction d'au moins un bagage dans l'espace de rangement.

Préférentiellement, les moyens de retenue comprennent une barre qui peut également servir de repose-pieds pour un passager assis.

Préférentiellement, le dispositif de rangement de bagages comporte une pluralité d'évidements similaires disposés, par exemple régulièrement, selon la direction d'intersection des surfaces de support. Un même dispositif de rangement peut alors accueillir les bagages de différents passagers.

Préférentiellement, l'embase définissant une surface de référence est une base plane.

Par ailleurs, l'inclinaison du dispositif libère un espace, qui selon un mode de réalisation préféré, peut être utilisé comme un espace de confort pour qu'un passager puisse caler ses pieds sous son siège, ou pour qu'un passager puisse caler ses pieds sous le siège du passager devant lui. Préférentiellement, le dispositif comporte donc au moins un espace de confort entre ladite surface de référence et au moins l'une des surfaces de support, à l'opposé de l'espace de rangement vis-à-vis de cette dernière, cet espace de confort permettant à au moins un passager d'y disposer ses pieds.

Préférentiellement, les deux surfaces de support sont suffisamment longues transversalement à l'intersection des surfaces de support pour bloquer les bagages en cas de brusque décélération du véhicule.

Préférentiellement, le véhicule est un aéronef.

La présente invention concerne également un siège pour véhicule de transport en commun, ledit siège comportant une assise, muni d'un dispositif de rangement de bagages selon l'invention, ledit dispositif étant disposé en dessous de ladite assise.

Un tel siège présente l'avantage qu'un passager peut introduire son ou ses bagages dans le dispositif de support de bagages en se tenant à proximité du siège, et qu'il peut ensuite s'asseoir sur le siège, ce qui permet de gagner du temps dans la phase d'embarquement. Cela présente également l'avantage que le passager peut extraire le ou les bagages de la même manière, ce qui permet de gagner du temps dans la phase de désembarquement.

Cela permet aussi de rehausser l'assise du siège par rapport aux sièges connus, l'espace libéré sous le siège étant utilisé pour le stockage des bagages, et les genoux des passagers étant moins fléchis qu'avec les sièges connus, cela permettant aux passagers d'être assis plus confortablement. Cela permet également d'améliorer le confort lié à l'inclinaison du siège.

Selon une variante de réalisation préférée, ledit siège pour aéronef comporte une assise et un dossier ; le dispositif de rangement est disposé en dessous de l'assise du siège, et l'assise du siège est mobile entre deux positions, une première position dite rabattue permettant à un passager de s'asseoir sur le siège, et une deuxième position dite relevée offrant un plus grand accès au dispositif pour l'introduction d'un ou plusieurs bagages dans celui-ci.

Un passager peut ainsi introduire son ou ses bagages dans le dispositif de support de bagages en se tenant à proximité du siège, l'assise étant relevée, et il peut ensuite s'asseoir sur le siège, l'assise étant rabattue, ce qui permet de gagner du temps dans la phase d'embarquement.

Cela présente également l'avantage que le passager peut extraire le ou les bagages de la même manière, ce qui permet de gagner du temps dans la phase de désembarquement.

La présente invention concerne aussi un ensemble de sièges alignés, par exemple côte à côte, comprenant au moins deux sièges pour véhicule de transport en commun tels que décrit ci-dessus, le dispositif de rangement de bagages etant commun aux différents sièges de l'ensemble.

La présente invention concerne aussi un aéronef comportant un dispositif de rangement de bagages tel que décrit ci-dessus.

Un tel aéronef présente l'avantage de permettre d'éviter de devoir placer des coffres à bagages au plafond de la cabine.

D'autres caractéristiques et avantages de l'invention apparaîtront à la lumière de la description détaillée ci-après et des dessins dans lesquels :
- la Figure 1 est une vue en perspective d'un dispositif de rangement de bagages selon l'invention,
- la Figure 2 est une vue du même dispositif sous un autre angle,
- la Figure 3 est un schéma d'une ouverture d'une aile du dispositif de support de bagages selon l'invention,
- la Figure 4 est une vue en perspective d'un ensemble de trois sièges pour passagers d'aéronef comportant un dispositif de rangement de bagages selon l'invention, trois bagages étant disposés dans le dispositif de rangement,
- la Figure 5 est une vue en perspective de l'arrière du même ensemble de trois sièges pour passagers d'aéronef comportant un dispositif de rangement de bagages,
- les Figures 6 et 7 correspondent au schéma de la Figure 3 et montrent des bagages de largeurs différentes positionnés dans l'ouverture.

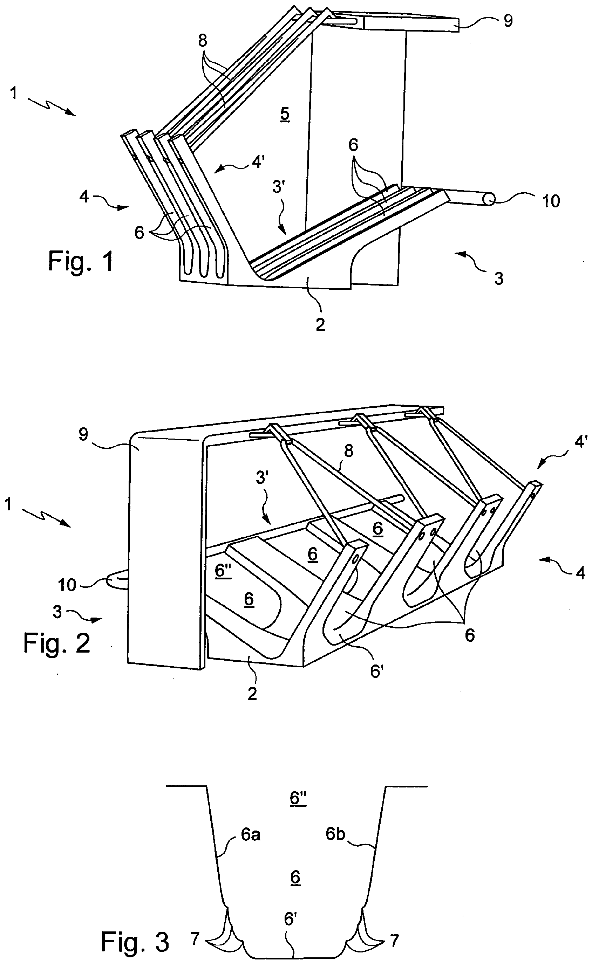

Les Figures 1 et 2 représentent un dispositif 1 de rangement de bagages selon l'invention. Dans cette forme de réalisation, ce dispositif de rangement est une pièce profilée comportant une base plane 2 rectangulaire posée sur un plancher, une première aile 3, et une deuxième aile 4. Les deux ailes 3, 4 possèdent une épaisseur, et comportent chacune une face supérieure formant une surface de support 3', 4' destinée au support de bagages.

Dans la suite de la description on considérera qu'une direction longitudinale est indiquée par l'axe longitudinal de la pièce profilée.

Les deux surfaces de support 3', 4' de bagages se coupent suivant une droite d'intersection (non représentée) longitudinale, l'angle entre les deux surfaces étant aménagé avec un congé de raccordement. Les deux surfaces de support 3', 4' délimitent un espace de rangement 5 apte à recevoir un ou plusieurs bagages. L'intérieur de l'angle entre les deux surfaces de support 3', 4' est arrondi selon un congé de raccordement.

La longueur du dispositif 1 dans la direction longitudinale est déterminée en fonction de la destination du dispositif. Pour le mode de réalisation représenté, le dispositif 1 est destiné à être mis en place sous une rangée de trois sièges d'une cabine de passagers d'aéronef. Sa longueur suivant la direction longitudinale est donc adaptée en conséquence.

Dans le mode de réalisation représenté, la surface de support 3' est inclinée à environ 30° par rapport à l'horizontale et la surface de support 4' est inclinée à environ 60° par rapport à l'horizontale. Les deux surfaces 3' et 4' sont inclinées à environ 90° l'une par rapport à l'autre.

En référence aux Figures 1, 2 et 3, le dispositif 1 comporte des évidements allongés suivant une direction transversale et parallèle à la base plane 2. Ces évidements sont répartis régulièrement suivant la direction longitudinale. Ils traversent l'aile 3, et débouchent dans l'espace de rangement 5 à travers la surface de support 3'. Ils traversent également l'aile 4, et débouchent dans l'espace de rangement 5 à travers la surface de support 4'.

Dans le mode de réalisation représenté, le nombre de ces évidements est de trois, c'est-à-dire identique au nombre de sièges correspondants. Les évidements sont identiques. Par ailleurs, ces évidements traversent le dispositif 1 de part en part suivant la direction transversale, débouchant ainsi des deux côtés du dispositif par des ouvertures 6.

Les ouvertures 6 ont une forme générale de U (Figure 3), comportant des branches latérales 6a, 6b, et un fond 6'. Chaque ouverture 6 s'évase depuis son fond 6' vers le bord libre de l'aile en formant sur celle-ci une embouchure 6". Chaque ouverture 6 portée par une aile 3 est alignée avec une ouverture 6 portée par une aile 4 selon la direction d'évidement transversale. Enfin, dans le mode de réalisation représenté, les ouvertures 6 possèdent un plan de symétrie perpendiculaire à la direction longitudinale. Egalement, le fond 6' de chaque ouverture 6 est tangent au congé de raccordement de l'intersection des deux surfaces de support 3', 4'.

Le bord latéral 6a porte des bossages 7 formant des crans (au nombre de trois sur la Figure 3, non représentés en Figures 1 et 2 par souci de lisibilité). Le bord latéral 6b porte également des bossages 7 symétriques des bossages précédents par rapport au plan de symétrie de l'évidement, et chaque paire de bossages symétriques forme un palier à une hauteur donnée entre le fond 6' de l'ouverture et son embouchure 6". Les bossages 7 sont constitués dans un matériau souple (ici du caoutchouc), de manière à épouser la forme des bagages.

L'aile 4 du dispositif de support 1 comporte deux points de fixation de part et d'autre de l'embouchure 6" de chaque ouverture 6 sur l'aile 4. Un moyen de retenue mobile est fixé au dispositif par ces deux points de fixation. Le moyen de retenue est ici une lanière 8 qui est fixée par ses deux extrémités aux deux points de fixation. Elle permet d'obturer partiellement l'espace de rangement 5 au-dessus de l'aile 4.

Une potence 9 est disposée au dessus du dispositif de support de bagages 1, plus précisément au-dessus de l'aile 3. Cette potence, qui sert principalement de support à des sièges d'aéronef, porte trois anneaux faisant face à l'aile 4, chaque anneau étant centré en regard de l'embouchure 6" d'une ouverture 6. Un crochet est fixé au milieu de chaque lanière 8 et coopère avec l'anneau correspondant de telle sorte que la lanière 8 prend une disposition en forme de V entre l'embouchure 6" sur l'aile 4 et le crochet correspondant, le crochet prenant la place de la pointe du V.

Une barre 10 est fixée à l'aile 3 du dispositif de support de bagages 1, à l'opposé de la base plane 2, à proximité des embouchures 6" des ouvertures 6. Cette barre 10 est adaptée à servir de repose-pieds. Elle est positionnée sensiblement parallèle à la base plane, en travers des embouchures 6", en travers des ouvertures 6 et réalise ainsi également un moyen de retenue fixe pour les bagages disposés dans les évidements du dispositif de support de bagages.

Le dispositif 1 comporte en outre un espace vide entre le prolongement du plan de la base plane 2 et l'aile 3, de taille suffisante pour l'introduction des pieds d'un passager.

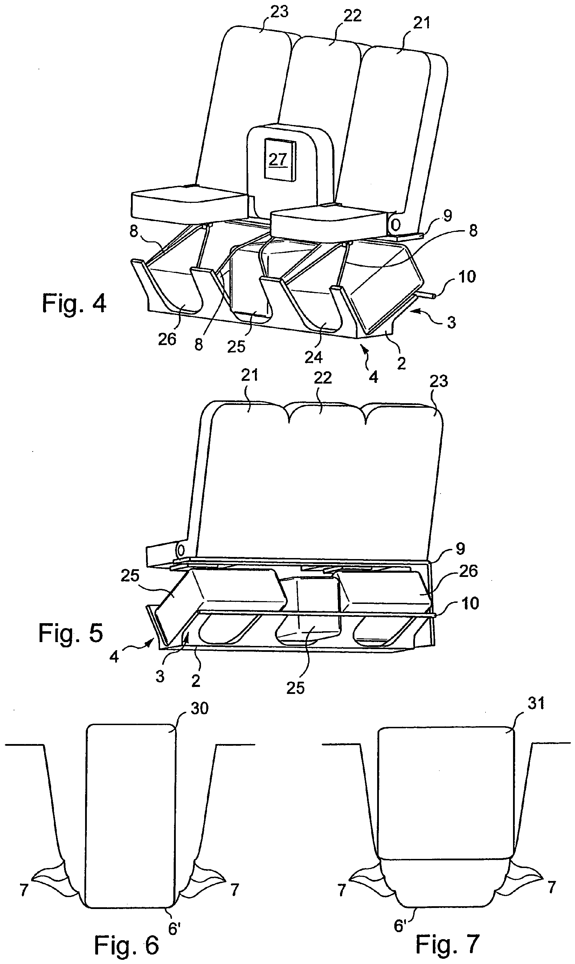

En référence aux Figures 4, 5, 6 et 7, le dispositif 1 de rangement de bagages selon l'invention est placé sur un plancher et sous une rangée de trois sièges 21, 22, 23. Chaque siège comporte un dossier et une assise qui sont fixés sur la potence 9, chaque siège étant au-dessus d'un évidement. Les dossiers des sièges sont positionnés au-dessus de l'aile 3, c'est-à-dire l'aile la plus proche de l'horizontale.

Trois bagages de forme parallélépipédique rectangle 24, 25 et 26 sont disposés dans le dispositif de support de bagages. Chaque bagage est disposé sous l'assise d'un siège 21, 22, 23. Les bagages 24 et 26 sont disposés à plat dans l'espace de rangement 5, c'est-à-dire de telle sorte qu'un de leur angle est placé dans l'angle des surfaces de support de bagages 3', 4', les plus grandes faces de chacun de ces bagages étant positionnées parallèlement à la surface de support de bagages 3'.

Le bagage 25 est disposé verticalement à la fois dans l'espace de rangement 5 et dans un évidement. Ses plus grandes faces sont positionnées perpendiculairement à la direction longitudinale. Dans la direction transversale de l'évidement, du côté de l'ouverture 6 sur l'aile 3, le bagage 25 bute contre la barre 10. Toujours dans la direction de l'évidement, du côté de l'ouverture 6 de l'évidement sur l'aile 4, le bagage 25 est retenu par une lanière 8.

Pour procéder au chargement ou au déchargement, l'utilisateur, par exemple le passager, décroche la lanière 8 de la potence 9 de manière à ouvrir un chemin d'accès à l'espace de rangement 5. Avantageusement, au moment du chargement ou du déchargement des bagages, l'assise d'un siège 21, 22, 23 peut également être basculée contre le dossier correspondant, de manière à agrandir le chemin d'accès à l'espace de rangement 5. Sur la Figure 4, l'assise du siège 22 est ainsi représentée en position relevée et les assises des sièges 21 et 23 sont représentées en position basse. Pour chaque siège 21, 22, 23, un mécanisme (non représenté) permet de maintenir les assises en position relevée en l'absence du poids d'un passager assis sur l'assise.

En référence aux Figures 6 et 7, les paliers formés par les bossages 7 portés par les parois latérales 6a, 6b des ouvertures 6 permettent de stabiliser des bagages de différentes largeurs lorsqu'ils sont disposés verticalement dans un évidement. Sur la Figure 6, un bagage 30 de faible largeur est positionné dans le dispositif 1 et est appuyé verticalement sur le fond 6' d'une ouverture 6, en étant stabilisé latéralement par une paire de bossages 7. Sur la Figure 7, un bagage 31 de grande largeur est positionné dans le dispositif 1 et est appuyé verticalement sur le palier formé par une paire de bossages 7. Le caractère souple des bossages 7 leur permet d'épouser la forme des bagages et de les maintenir efficacement en place.

Par ailleurs, dans le mode de réalisation représenté, un gilet de sauvetage 27 est positionné sous l'assise de chaque siège.

La rangée de trois sièges 21, 22, 23 est disposée dans la cabine d'un avion ne comportant pas de logement à bagages au plafond, ou comportant un espace vide au-dessus des sièges, apte à permettre à un passager de circuler debout devant les sièges parallèlement à ladite rangée de sièges.

Le dispositif décrit permet de loger des bagages, de dimensions et de formes variées, d'assurer que ces bagages sont maintenus, tout en utilisant au mieux l'espace disponible, et en limitant le poids du dispositif. Sa facilité d'utilisation et son emplacement dans la cabine permettent d'accélérer le processus d'embarquement ou de désembarquement.

Cela permet aux passagers d'accéder à leur siège en venant d'une allée longitudinale de la cabine ou d'accéder à l'allée en venant de leur siège tout en se tenant debout et sans avoir à fléchir la tête ou le dos, ce qui permet par rapport à une cabine d'avion comportant des sièges classiques et des compartiments à bagages disposés au plafond, de gagner du temps pendant la phase d'embarquement et pendant la phase de désembarquement et d'augmenter le confort des passagers. Cela est par ailleurs très utile pour aménager des accès plus faciles pour les passagers handicapés à mobilité réduite.

Cela permet également de réduire la largeur de l'allée par rapport aux cabines de l'état de l'art, les passagers n'ayant pas besoin de passer du temps dans l'allée au cours des phases d'embarquement et de désembarquement pour introduire leurs bagages dans les coffres à bagages disposés sous le plafond de la cabine.

Un tel aéronef est moins lourd que les aéronefs comportant des coffres à bagages sous le plafond, et donc moins consommateur de carburant, et a donc une autonomie plus grande. Il présente une plus grande capacité de stockage de bagages.

Cela permet également de fournir à chaque passager un espace de rangement de bagages individualisé, ce qui permet aux passagers de ne pas confondre leurs bagages avec ceux des autres passagers.

Enfin, le passager assis sur un siège 21, 22, 23 bénéficie de l'espace de confort entre l'aile 4 le plancher, où il peut disposer ses pieds. Egalement, un passager assis sur un siège (non représenté) positionné derrière un siège 21, 22 ou 23 bénéficie de l'espace de confort entre l'aile 3 et le plancher, où il peut disposer ses pieds.

La présente invention ne se limite pas à la forme de réalisation décrite ci-dessus et représentée au dessin. Elle concerne également toutes les variantes de réalisation à la portée de l'homme du métier.

En particulier, le dispositif de rangement peut ne comporter aucun évidement. Il est également possible d'avoir un évidement réalisant une ouverture, débouchante ou non, dans une seule aile du dispositif. Cet évidement, s'il est réalisé, peut aussi réaliser une ouverture non débouchante dans chacune des surfaces de support décrites.

La description ci-dessus montre une forme de réalisation où le dispositif de rangement est réalisé d'une seule pièce à partir d'un profilé sensiblement en V. Un tel dispositif, reprenant la même forme ou une forme différente, pourrait également être réalisé avec plusieurs éléments.

En outre, les bossages décrits plus haut peuvent avoir différentes formes, et ressembler par exemple à des ergots. Ils peuvent être dans différents matériaux, par exemple de la mousse.

D'autres systèmes de retenue peuvent être envisagés pour retenir des bagages comme par exemple un couvercle ou un store.

Par ailleurs, la base plane peut être remplacée par un rail de fixation, ou par tout autre moyen de fixation.

Aussi, le dispositif décrit est destiné à être mis en place sous trois sièges mais il peut être mis en place sous un nombre quelconque de sièges.

Enfin, le dispositif selon l'invention peut être utilisé dans un véhicule de transport en commun autre qu'un aéronef, par exemple un train ou un autobus.

## Revendications

1. Siège pour véhicule de transport en commun, ledit siège comportant une assise et étant muni d'un dispositif (1) de rangement de bagages en-dessous de ladite assise, ledit dispositif comportant :
- une première surface de support (3'),
- une deuxième surface de support (4'),
**caractérisé en ce que** ledit dispositif comporte en outre une embase (2) définissant une surface de référence et **en ce que** chacune desdites surfaces de support (3', 4') est sensiblement plane et inclinée par rapport à ladite surface de référence, les deux surfaces de support (3', 4') convergeant vers ladite surface de référence et définissant un espace de rangement (5) apte à contenir un bagage.

2. Siège pour véhicule de transport en commun selon la revendication 1, **caractérisé en ce que** les deux surfaces de support (3', 4') forment un angle compris entre 75° et 135°.

3. Siège pour véhicule de transport en commun selon l'une des revendications 1 ou 2, **caractérisé en ce qu'**il comprend en outre un évidement, ledit évidement réalisant au moins une ouverture dans l'une des surfaces de support (3', 4').

4. Siège pour véhicule de transport en commun selon la revendication 3, **caractérisé en ce que** ledit évidement débouche dans l'espace de rangement (5) à travers la première surface de support (3') et à travers la deuxième surface de support (4').

5. Siège pour véhicule de transport en commun selon la revendication 3 ou la revendication 4, **caractérisé en ce que** ledit évidement comporte un fond (6') allongé suivant une direction transversale à l'intersection des deux surfaces de support (3', 4'), et **en ce que** ledit évidement s'étend, à l'opposé du fond (6') de telle sorte qu'il réalise dans chaque surface de support (3', 4') une ouverture (6), l'ouverture (6) comportant au moins un bossage (7) formant un cran pour épouser la forme des bagages.

6. Siège pour véhicule de transport en commun selon l'une quelconque des revendications 1 à 5, **caractérisé en ce qu'**il comporte en outre au moins un espace de confort entre ladite surface de référence et au moins l'une des surfaces de support permettant à au moins un passager d'y disposer ses pieds.

7. Siège pour véhicule de transport en commun selon l'une quelconque des revendications 1 à 6, **caractérisé en ce que** les deux surfaces de support (3', 4') sont suffisamment longues transversalement à l'intersection des surfaces de support (3', 4') pour bloquer les bagages en cas de brusque décélération du véhicule.

8. Siège pour véhicule de transport en commun selon l'une quelconque des revendications 1 à 7, **caractérisé en ce que** le véhicule de transport en commun est un aéronef.

9. Siège pour véhicule de transport en commun selon l'une des revendications 1 à 8, **caractérisé en ce que** l'assise du siège est mobile entre deux positions, une première position dite rabattue permettant à un passager de s'asseoir sur le siège, et une deuxième position dite relevée offrant un plus grand accès au dispositif (1) pour l'introduction d'un ou plusieurs bagages dans celui-ci.

10. Aéronef, **caractérisé en ce qu'**il comporte un siège selon l'une des revendications 1 à 9.

## Patentansprüche

1. Sitz für öffentliches Transportfahrzeug, wobei der Sitz eine Sitzfläche umfasst und mit einer Einrichtung (1) zum Verstauen von Gepäckstücken unter der Sitzfläche versehen ist, wobei die Einrichtung umfasst:
- eine erste Trägerfläche (3'),
- eine zweite Trägerfläche (4'),
**dadurch gekennzeichnet, dass** die Einrichtung darüber hinaus einen Sockel (2) umfasst, der eine Referenzfläche definiert, und dass jede der Trägerflächen (3', 4') im Wesentlich eben und in Bezug auf die Referenzfläche geneigt ist, wobei die beiden Trägerflächen (3', 4') zu der Referenzfläche konvergieren und einen Stauraum (5) definieren, der geeignet ist, ein Gepäckstück aufzunehmen.

2. Sitz für öffentliches Transportfahrzeug nach Anspruch 1, **dadurch gekennzeichnet, dass** die beiden Trägerflächen (3', 4') einen Winkel zwischen 75° und 135° bilden.

3. Sitz für öffentliches Transportfahrzeug nach einem der Ansprüche 1 oder 2, **dadurch gekennzeichnet, dass** er darüber hinaus eine Ausnehmung umfasst, wobei die Ausnehmung mindestens eine Öffnung in einer der Trägerflächen (3', 4') bildet.

4. Sitz für öffentliches Transportfahrzeug nach Anspruch 3, **dadurch gekennzeichnet, dass** die Ausnehmung in den Stauraum (5) durch die erste Trägerfläche (3') und durch die zweite Trägerfläche (4') mündet.

5. Sitz für öffentliches Transportfahrzeug nach Anspruch 3 oder Anspruch 4, **dadurch gekennzeichnet, dass** die Ausnehmung einen länglichen Boden (6') entlang einer Richtung quer zur Schnittlinie der beiden Trägerflächen (3', 4') umfasst und dass sich die Ausnehmung entgegengesetzt zum Boden (6') so erstreckt, dass sie in jeder Trägerfläche (3', 4') eine Öffnung (6) bildet, wobei die Öffnung (6) mindestens eine Erhebung (7) umfasst, die eine Raste bildet, um sich eng an die Form der Gepäckstücke anzulegen.

6. Sitz für öffentliches Transportfahrzeug nach einem der Ansprüche 1 bis 5, **dadurch gekennzeichnet, dass** er darüber hinaus mindestens einen Komfortraum zwischen der Referenzfläche und mindestens einer der Trägerflächen umfasst, der es mindestens einem Passagier ermöglicht, seine Füße dort abzustellen.

7. Sitz für öffentliches Transportfahrzeug nach einem der Ansprüche 1 bis 6, **dadurch gekennzeichnet, dass** die beiden Trägerflächen (3', 4') quer zur Schnittlinie der Trägerflächen (3', 4') ausreichend lang sind, um die Gepäckstücke im Fall einer abrupten Verzögerung des Fahrzeugs festzuhalten.

8. Sitz für öffentliches Transportfahrzeug nach einem der Ansprüche 1 bis 7, **dadurch gekennzeichnet, dass** das öffentliche Transportfahrzeug ein Flugzeug ist.

9. Sitz für öffentliches Transportfahrzeug nach einem der Ansprüche 1 bis 8, **dadurch gekennzeichnet, dass** die Sitzfläche des Sitzes zwischen zwei Positionen beweglich ist, einer ersten sogenannten ausgeklappten Position, die es einem Passagier ermöglicht, sich auf die Sitzfläche zu setzen, und einer zweiten sogenannten angehobenen Position, die einen größeren Zugang zu der Einrichtung (1) zum Einführen eines oder mehrerer Gepäckstücke in diese bietet.

10. Flugzeug, **dadurch gekennzeichnet, dass** es einen Sitz nach einem der Ansprüche 1 bis 9 umfasst.

## Claims

1. Seat for a public transport vehicle, said seat having a seat part and being provided with a luggage storage device (1) beneath said seat, said device having:
- a first support surface (3'),
- a second support surface (4'),
**characterized in that** said device also has a base (2) defining a reference surface, and **in that** each of said support surfaces (3', 4') is substantially flat and inclined with respect to said reference surface, the two support surfaces (3', 4') converging towards said reference surface and defining a storage space (5) that is able to contain an item of luggage.

2. Seat for a public transport vehicle according to Claim 1, **characterized in that** the two support surfaces (3', 4') form an angle of between 75° and 135°.

3. Seat for a public transport vehicle according to either of Claims 1 and 2, **characterized in that** it also comprises a recess, said recess forming at least one opening in one of the support surfaces (3', 4').

4. Seat for a public transport vehicle according to Claim 3, **characterized in that** said recess opens into the storage space (5) through the first support surface (3') and through the second support surface (4').

5. Seat for a public transport vehicle according to Claim 3 or Claim 4, **characterized in that** said recess has an elongate bottom (6') in a direction transverse to the intersection of the two support surfaces (3', 4'), and **in that** said recess extends, away from the bottom (6'), such that it produces an opening (6) in each support surface (3', 4'), the opening (6) having at least one boss (7) forming a step for matching the shape of the items of luggage.

6. Seat for a public transport vehicle according to any one of Claims 1 to 5, **characterized in that** it also has at least one comfort space between said reference surface and at least one of the support surfaces, allowing at least one passenger to place his feet therein.

7. Seat for a public transport vehicle according to any one of Claims 1 to 6, **characterized in that** the two support surfaces (3', 4') are sufficiently long transversely to the intersection of the support surfaces (3', 4') to prevent the items of luggage from moving in the event of an abrupt deceleration of the vehicle.

8. Seat for a public transport vehicle according to any one of Claims 1 to 7, **characterized in that** the public transport vehicle is an aircraft.

9. Seat for a public transport vehicle according to any one of Claims 1 to 8, **characterized in that** the seat part of the seat is movable between two positions, a first position, known as a folded-down position, allowing a passenger to sit on the seat, and a second position, known as a raised position, affording greater access to the device (1) for introducing one or more items of luggage into the latter.

10. Aircraft, **characterized in that** it has a seat according to one of Claims 1 to 9.
